# EUROPÄISCHE PATENTSCHRIFT

(11) **EP 3 180 974 B1**
(45) Veröffentlichungstag und Bekanntmachung des Hinweises auf die Patenterteilung: **27.11.2024**
(21) Anmeldenummer: 16190556.7
(22) Anmeldetag: 26.09.2016
(51) Int. Cl.: C12C 7/165, C12C 7/17, C12C 7/20, C12C 7/24, A01D 41/127, C12C 7/01

(54) **VERFAHREN FÜR DEN BETRIEB EINES MÄHDRESCHERS**
METHOD FOR OPERATING A COMBINE HARVESTER
PROCÉDÉ DE FONCTIONNEMENT D'UNE MOISSONNEUSE-BATTEUSE

(30) Priorität: 18.12.2015 DE 102015122269
(43) Veröffentlichungstag der Anmeldung: 21.06.2017
(73) Patentinhaber: CLAAS Selbstfahrende Erntemaschinen GmbH, 33428 Harsewinkel (DE)
(72) Erfinder: Baumgarten, Joachim, 48361 Beelen (DE); Bussmann, Christoph, 33428 Harsewinkel (DE); Heitmann, Christoph, 48231 Warendorf (DE); Neu, Sebastian, 49196 Bad Laer (DE); Terörde, Stefan, 48231 Warendorf (DE); Vöcking, Henner, 33397 Rietberg (DE); Wilken, Andreas, 49143 Bissendorf (DE); Wllensiek, Scott, 33428 Harsewinkel (DE)
(74) Vertreter: CLAAS Gruppe

(56) Entgegenhaltungen:
- EP-A1- 2 781 975
- EP-A2- 2 837 279
- US-A1- 2003 216 158
- US-B1- 6 397 571

## Beschreibung

Die Erfindung betrifft ein Verfahren für den Betrieb eines Mähdreschers mit den Merkmalen des Oberbegriffs von Anspruch 1 sowie einen Mähdrescher zur Durchführung dieses Verfahrens mit den Merkmalen des Oberbegriffs von Anspruch 14.

Mähdrescher dienen der Mahd und dem Drusch von Körnerfrüchten. Dabei erfolgt der Drusch durch ein Dreschwerk, welches aus dem von dem Mähdrescher durch das Schneidwerk aufgenommenen Erntegut Korngut gewinnt, das nach dem Dreschen einer Abscheidung und einer anschließenden Reinigung einem Getreidetank zugeführt wird. Als weitere Bestandsteile des Ernteguts bleiben weiter z. B. die Streu und das Stroh übrig, welche entweder über das Feld verteilt oder - im Falle des Strohs - auf Schwad z. B. zur späteren Aufnahme durch eine Ballenpresse gelegt werden können. Hier und nachfolgend ist unter dem Begriff "Erntegut" der gesamte vom Dreschwerk aufgenommene Gutstrom zu verstehen, also einschließlich derjenigen Körner, welche noch nicht als Korngut aus dem Erntegut gewonnen wurden, und den Körnern, welche ggf. in dem Erntegutstrom als Verlust verbleiben und mit dem Stroh abgelegt werden.

Im Dreschwerk wird das Korn durch eine im Prinzip wälzende Bearbeitung aus dem Stroh gerieben - ausgedroschen - und vom übrigen Erntegutstrom getrennt, so dass es direkt der Reinigung zugeführt werden kann. Der übrig gebliebene Erntegutstrom wird dann dem Abscheidebereich zugeführt, in welchem z. B. durch eine Schüttleranordnung das verbliebene Korn von dem Erntegutstrom getrennt und danach ebenfalls der Reinigung zugeführt wird.

Ein effizienter Ernteprozess lässt sich durch die Ansteuerung der Arbeitsorgane mittels eines Fahrerassistenzsystems erreichen. Basierend auf einer Prozessführungsstrategie ermittelt das Fahrerassistenzsystem mindestens einen Maschinenparameter der Arbeitsorgane automatisch, wobei der ermittelte Maschinenparameter dem jeweiligen Arbeitsorgan vorgegeben wird (DE 10 2013 106 131 A1). Bei diesem bekannten Verfahren ist ein selbsttätiger Wechsel der Prozessführungsstrategie durch das Fahrerassistenzsystem vorgesehen, sofern vorbestimmte Qualitätskriterium nicht erfüllt werden. Damit lässt sich eine besonders hohe Effizienz des Ernteprozesses realisieren. Ein weiteres Verfahren gemäß dem Oberbegriff des Anspruchs 1 ist aus der US 2003/216158 bekannt.

Eine Herausforderung bei dem bekannten Verfahren besteht darin, die hohe Effizienz des Ernteprozesses für unterschiedliche Fruchtarten sicherzustellen, die zumindest zum Teil unterschiedliche Maschinenkonstellationen erfordern.

Der Erfindung liegt das Problem zugrunde, das bekannte Verfahren derart auszugestalten und weiterzubilden, dass die Effizienz des Ernteprozesses auch beim Dreschen unterschiedlicher Fruchtarten gesteigert wird.

Das obige Problem wird bei einem Verfahren gemäß dem Oberbegriff von Anspruch 1 durch die Merkmale des kennzeichnenden Teils von Anspruch 1 gelöst.

Wesentlich ist die grundsätzliche Überlegung, dass die dem Ernteprozess zugrundeliegende Prozessführungsstrategie basierend auf der Erntegutkonstellation und der Maschinenkonstellation vorausgewählt und/oder parametriert wird. Hierfür werden zuvor mittels des Fahrerassistenzsystems die Erntegutkonstellation und die Maschinenkonstellation ermittelt.

Mit der vorschlagsgemäßen Lösung kann einerseits auf die zu dreschende Fruchtart reagiert werden. Andererseits wird die Prozessführungsstrategie durch die jeweils vorherrschende Maschinenkonstellation bestimmt, die wiederum von der Erntegutkonstellation abhängen kann. Im Ergebnis ergibt sich mit der vorschlagsgemäßen Lösung eine optimale Vorauswahl bzw. Parametrierung der Prozessführungsstrategie.

Bei den bevorzugten Ausgestaltungen gemäß den Ansprüchen 2 und 3 umfasst die Prozessführungsstrategie eine Steuerung oder Regelung, deren jeweilige Arbeitsweise in Abhängigkeit von der Erntegutkonstellation und von der Maschinenkonstellation abhängen. Diese an die jeweiligen Konstellationen anpassbare Arbeitsweise lässt sich besonders einfach bei einer Kennfeldsteuerung gemäß Anspruch 3 realisieren.

Bei der erfindungsgemäßen Lösung findet allenfalls eine Vorauswahl der Prozessführungsstrategie statt, da die Prozessführungsstrategie im Laufe des Ernteprozesses optimiert oder durch eine andere Prozessführungsstrategie ersetzt wird. Insoweit bildet die vorausgewählte Prozessführungsstrategie allenfalls eine Ausgangsstrategie, die sich im Laufe des Ernteprozesses entsprechend fortentwickelt.

Die weiter bevorzugte Ausgestaltung gemäß Anspruch 7 betrifft eine einfach zu automatisierende Möglichkeit der Vorauswahl der Prozessführungsstrategie, indem jeder Prozessführungsstrategie mindestens eine die Erntegutkonstellation betreffende Bedingung und mindestens eine die Maschinenkonstellation betreffende Bedingung zugeordnet ist. Die jeweiligen Bedingungen lassen sich ohne weiteres modifizieren, so dass sich die der Vorauswahl zugrundeliegende Systematik leicht auf sich verändernde Rahmenbedingungen anpassen lässt.

Die weiter bevorzugten Ausgestaltungen gemäß den Ansprüchen 9 bis 13 betreffen in erster Linie das Dreschen von Mais, das sowohl an die Steuerung bzw. Regelung als auch an die Maschinenkonstellation ganz andere Anforderungen stellt als das Dreschen anderer Getreidesorten wie "Weizen", "Gerste", "Hafer" o. dgl.. Mit der vorschlagsgemäßen Lösung ist eine automatische Ermittlung und Vorgabe von Maschinenparametern möglich, indem die Prozessführungsstrategie wie oben vorgeschlagen an die Erntegutkonstellation und an die Maschinenkonstellation angepasst wird.

Nach einer weiteren Lehre gemäß Anspruch 14, der eigenständige Bedeutung zukommt, wird ein Mähdrescher zur Durchführung des vorschlagsgemäßen Verfahrens als solcher beansprucht. Auf alle Ausführungen zu dem vorschlagsgemäßen Verfahren, die geeignet sind, den Mähdrescher zu erläutern, darf verwiesen werden.

Im Folgenden wird die Erfindung anhand einer ein Ausführungsbeispiel darstellenden Zeichnung näher erläutert. In der Zeichnung zeigt
- Fig. 1:: eine Seitenansicht eines vorschlagsgemäßen Mähdreschers zur Durchführung des vorschlagsgemäßen Verfahrens und
- Fig. 2: eine schematische Darstellung eines Fahrerassistenzsystems des Mähdreschers gemäß Fig. 1.

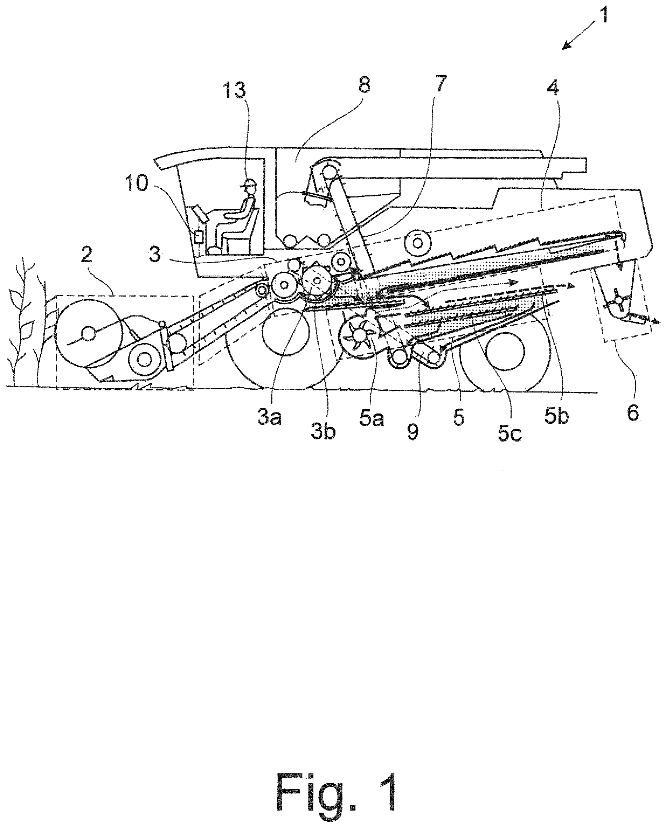

Die in Fig. 1 dargestellte landwirtschaftliche Arbeitsmaschine 1 ist als Mähdrescher ausgestaltet und dient entsprechend der Abarbeitung eines landwirtschaftlichen Ernteprozesses. Der Mähdrescher 1 weist die Arbeitsorgane Schneidwerk 2, Dreschwerk 3, Abscheideanordnung 4, Reinigungsanordnung 5 und Verteilanordnung 6 auf.

Während das Schneidwerk 2 dem Schneiden und der Aufnahme des Ernteguts dient, kommt dem Dreschwerk 3 die Aufgabe des Dreschens des aufgenommenen Ernteguts zu Korngut zu. Unter dem Erntegut ist dabei das gesamte vom Feldbestand aufgenommene und dem Dreschwerk 3 zugeführte Material zu verstehen, wobei das Korngut dann die von dem Mähdrescher aus dem Erntegut zu gewinnenden Körner bezeichnet.

Das Dreschwerk 3 ist mit einer Dreschtrommel 3a ausgestattet, die mit einem Dreschkorb 3b zusammenwirkt. Der dem Dreschwerk 3 zugeführte Erntegutstrom wird im Anschluss - ohne das bereits hier gewonnene Korngut - der Abscheideanordnung 4 zugeführt.

Grundsätzlich dient das Dreschwerk 3 zum Ausreiben des überwiegenden Teils des Kornguts aus dem Erntegut durch den Dreschvorgang. In der Abscheideanordnung 4 wird dann das Erntegut mit dem in ihm verbliebenen Kornanteil so bewegt, z. B. geschüttelt, dass auch das verbliebene Korngut möglichst aus dem Stroh und dem sonstigen Erntegut herausgetrennt wird. Das im Dreschwerk 3 und der Abscheideanordnung 4 gewonnene Korngut wird dann der Reinigungsanordnung 5 zugeführt. In der Reinigungsanordnung 5, welche regelmäßig mehrstufig ist, werden dann noch bis hierher im Korngut mitgeführte Nichtkornbestandteile, z. B. Spreu und Strohteile, sowie unausgedroschenes Material, wie etwa Ährenspitzen oder Grannen, von dem Korngut getrennt. Anschließend gelangt das gereinigte Korngut über eine Transportanordnung 7, z. B. einem Kornelevator, in einen Korntank 8. Das ausgedroschene Stroh - also das verbliebene Erntegut in der Abscheideanordnung 4 - wird von dem Mähdrescher 1 abgelegt, z. B. als Schwad entlang der Fahrspur.

Der Anteil des Ernteguts, der in der Reinigungsanordnung weder der Transportanordnung 8 zugeführt noch in obiger Weise abgelegt wird, wird in eine sogenannte Überkehr, über die es wieder dem Dreschwerk 3 zugeführt wird. Bei einer Reinigungsanordnung 5 mit Reinigungsgebläse 5a und Siebanordnung, die insbesondere ein Obersieb 5b und ein Untersieb 5c aufweist, gelangt der Teil des Ernteguts in die Überkehr 9, das zwar das Obersieb 5b, nicht jedoch das Untersieb 5c passiert und außerdem zu schwer ist, durch das Reinigungsgebläse 5a in Richtung der Verteilanordnung 6 geblasen zu werden. Die Arbeitsorgane 2-6 des Mähdreschers 1 können jeweils durch die Vorgabe verschiedener Maschinenparameter angesteuert werden. Am Beispiel des Dreschwerks 3 fallen hierunter in Abhängigkeit von der Maschinenkonstellation Antriebsparameter, wie beispielsweise eine Trommeldrehzahl oder sonstige Bewegungskennzahlen der Dreschtrommel sowie eine Korbweite - also der Abstand zwischen der Dreschtrommel 3a und dem Dreschkorb 3b. Sofern das Dreschwerk 3 Entgrannerklappen aufweist, können auch diese im Rahmen der Ansteuerung des Dreschwerks 3 verstellt werden.

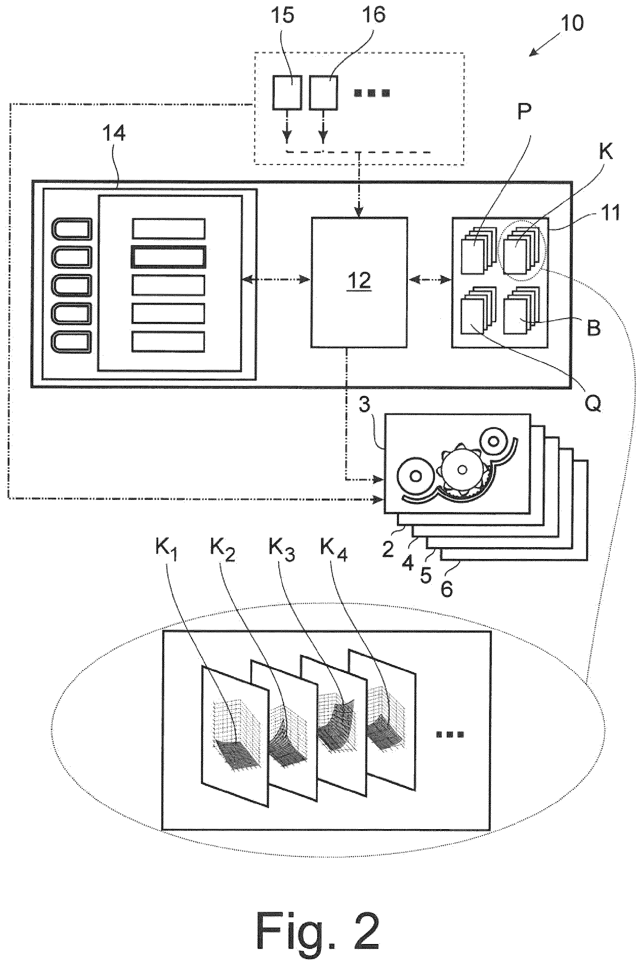

Der vorschlagsgemäße Mähdrescher 1 weist ferner ein Fahrerassistenzsystem 10 zur Ansteuerung der Arbeitsorgane 2-6 auf. Dieses Fahrerassistenzsystem 10 umfasst einen Speicher 11 zum Hinterlegen von Daten - also einen Speicher im informationstechnischen Sinne - und eine Rechenvorrichtung 12 zur Verarbeitung der in dem Speicher 11 hinterlegten Daten. Grundsätzlich ist das Fahrerassistenzsystem 10 dazu eingerichtet, einen Benutzer 13 des Mähdreschers 1 bei der Bedienung des Mähdreschers 1 zu unterstützen. Das Fahrerassistenzsystem 10 mit dem Speicher 11 und der Rechenvorrichtung 12 ist in Fig. 2 gezeigt.

In dem Speicher 11 des Fahrerassistenzsystems 10 sind mehrere Prozessführungsstrategien P abgelegt, die jeweils auf die Erfüllung mindestens eines Qualitätskriteriums Q gerichtet sind. Dabei ist es so, dass das Fahrerassistenzsystem 10 basierend auf einer solchen Prozessführungsstrategie mindestens einen Maschinenparameter der Arbeitsorgane 2-6 automatisch ermittelt und dem jeweiligen Arbeitsorgan 2-6 vorgibt.

Ein obiges Qualitätskriterium Q ist beispielsweise die Einstellung oder Optimierung von Ernteprozessparametern wie "Ausdruschverluste", "Bruchkornanteil", "Schichthöhe", "Abscheideverluste", "Reinigungsverluste", "Dreschwerksbelastung" oder "Kraftstoffverbrauch". Die Prozessführungsstrategie umfasst ganz allgemein die Systematik, nach der die Erfüllung des jeweiligen Qualitätskriteriums erreicht werden soll. Insbesondere handelt es sich hierbei um entsprechende Steuer- oder Regelvorgaben, wie weiter unten im Detail erläutert wird.

Wesentlich ist nun, dass mittels des Fahrerassistenzsystems 10 sowohl die Erntegutkonstellation, insbesondere die jeweils abzuerntende Fruchtart, als auch die Maschinenkonstellation ermittelt werden und dass basierend auf der ermittelten Erntegutkonstellation und der ermittelten Maschinenkonstellation eine Prozessführungsstrategie P aus den in dem Speicher 11 gespeicherten Prozessführungsstrategien vorausgewählt wird. Damit ist grundsätzlich sichergestellt, dass die Prozessführungsstrategie nicht nur auf die abzuerntende Fruchtart, sondern auch auf die tatsächlich vorhandene Maschinenkonstellation ausgerichtet ist. Beispielsweise können in Abhängigkeit von der mechanischen Konfiguration des Dreschwerks, insbesondere in Abhängigkeit von der konkreten Ausgestaltung des Dreschkorbs, ganz unterschiedliche Prozessführungsstrategien optimal sein. Das gleiche gilt für die weiteren Arbeitsorgane 2-6. Ein weiteres Beispiel hierfür wird anhand der Reinigungsanordnung 5 weiter unten erläutert. Wie oben angedeutet, umfasst die vorausgewählte Prozessführungsstrategie P eine auf die Erfüllung des mindestens einen zugeordneten Qualitätskriteriums gerichtete Neuerung oder Regelung. Mit "Steuerung" ist hier die Ermittlung der Maschinenparameter gemeint, ohne dass ein Rückkopplungszweig im regelungstechnischen Sinne vorgesehen ist. Mit dem Begriff "Regelung" ist die Ermittlung der Maschinenparameter gemeint, bei der ein entsprechender Rückkopplungszweig im regelungstechnischen Sinne vorgesehen ist. Vorzugsweise ist es nun so, dass die Steuer- bzw. Regelparameter der Steuerung bzw. der Regelung von der Erntegutkonstellation und von der Maschinenkonstellation abhängen. Insoweit kann die Auswahl der Prozessführungsstrategie im Ergebnis auf eine schlichte Parametrierung der Steuerung bzw. Regelung zurückgehen.

Die der jeweiligen Prozessführungsstrategie P zugeordnete Steuerung bzw. Regelung ist hier und vorzugsweise eine auf mindestens einem Kennfeld K basierende Steuerung bzw. Regelung, wobei das mindestens eine Kennfeld K von der Erntegutkonstellation und der Maschinenkonstellation abhängt. Grundsätzlich kann es vorgesehen sein, dass sich verschiedene Prozessführungsstrategien durch die jeweils der Steuerung bzw. Regelung zugrundeliegenden Kennfelder unterscheiden.

Erfindungsgemäß wird die jeweilige Prozessführungsstrategie P durch das Fahrerassistenzsystem 10 lediglich vorausgewählt. Dies bedeutet, dass der Ernteprozess zunächst basierend auf der vorausgewählten Prozessführungsstrategie P umgesetzt wird und dass die vorausgewählte Prozessführungsstrategie im Laufe des Ernteprozesses optimiert oder durch eine andere Prozessführungsstrategie ersetzt wird. Im Ergebnis bedeutet der Begriff "Vorauswahl" vorliegend, dass die vorausgewählte Prozessführungsstrategie laufenden Änderungen ausgesetzt sein kann.

Wie oben angedeutet, handelt es sich bei der Erntegutkonstellation jedenfalls um die abzuerntende Fruchtart wie "Weizen", "Gerste", "Hafer", "Mais" o. dgl.. Grundsätzlich kann die Erntegutkonstellation aber auch Informationen zum Feldbestand wie Feldbestandsdichte, Feldbestandsfeuchte o. dgl. umfassen.

Die Maschinenkonstellation umfasst hier und vorzugsweise die mechanische und/oder steuerungstechnische Ausstattung mindestens eines Arbeitsorgans 2-6. Wie ebenfalls bereits angedeutet, kann die Maschinenkonstellation am Beispiel des Dreschwerks 3 die Konfiguration des Dreschwerks 3 mit unterschiedlichen Dreschkörben 3b umfassen. Dabei ist es regelmäßig vorgesehen, dass die Maschinenkonstellation in Abhängigkeit von der Erntegutkonstellation einzustellen ist. Beispielsweise kann das Ernten von Mais eine Änderung der Maschinenkonstellation im Hinblick auf die Dreschtrommel 3a, den Dreschkorb 3b, die Siebe 5a, 5b der Reinigungsanordnung 5 o. dgl. betreffen.

Grundsätzlich kann es vorgesehen sein, dass in Abhängigkeit von der Maschinenkonstellation den Arbeitsorganen 2-6 unterschiedliche Maschinenparameter vorgebbar sind. Dann ist es vorzugsweise so, dass das Fahrerassistenzsystem 10 in Abhängigkeit von der Maschinenkonstellation unterschiedliche Maschinenparameter ermittelt. In einem einfachen, noch zu erläuternden Fall bedeutet eine Maschinenkonstellation, bei der das Untersieb 5c der Reinigungsanordnung 5 fehlt, dazu, dass der Maschinenparameter "Untersiebweite" keine Berücksichtigung in der Prozessführungsstrategie finden darf. Andernfalls würde die tatsächliche Maschinenkonstellation von der der Prozessführungsstrategie zugrundeliegenden Maschinenkonstellation abweichen, so dass die vorgegebenen Qualitätskriterien regelmäßig nicht erfüllt werden können.

Für die Vorauswahl der Prozessführungsstrategie P mittels des Fahrerassistenzsystems 10 sind verschiedene vorteilhafte Varianten denkbar. Hier und vorzugsweise ist es so, dass die Vorauswahl der Prozessführungsstrategie P mittels des Fahrerassistenzsystems 10 auf die Abfrage von in dem Speicher 11 abgelegten Bedingungen B zurückgeht, wobei hierfür in dem Speicher 11 mindestens einer Prozessführungsstrategie P mindestens eine die Erntegutkonstellation betreffende Bedingung und mindestens eine die Maschinenkonstellation betreffende Bedingung zugeordnet ist. Eine Prozessführungsstrategie P wird mittels des Fahrerassistenzsystems 10 nur für den Fall ausgewählt, dass alle der jeweiligen Prozessführungsstrategie zugeordneten Bedingungen erfüllt sind. Beispielsweise kann einer auf die Maisernte ausgerichteten Prozessführungsstrategie P eine erste Bedingung, nach der es sich bei der Fruchtart um Mais handeln muss, und eine zweite Bedingung, nach der die Maschinenkonstellation einen für die Maisernte geeigneten Dreschkorb 3b und die Siebe 5b, 5c der Reinigungsanordnung 5 eine für Mais geeignete Siebweite aufweisen, sein.

Der dargestellte und insoweit bevorzugte Mähdrescher 1 weist die weiter oben angesprochenen Arbeitsorgane Schneidwerk 2, Dreschwerk 3, Abscheideanordnung 4 und Reinigungsanordnung 5 auf. Interessant für die vorschlagsgemäße Lösung ist die Tatsache, dass mindestens eines dieser Arbeitsorgane 2-6 zur Änderung der Maschinenkonstellation konfigurierbar ist. Damit ist eine Anpassung des Mähdreschers 1 auf die jeweils abzuerntende Fruchtart möglich.

Die Ermittlung der Erntegutkonstellation kann in ganz unterschiedlicher Weise erfolgen. Im einfachsten Fall wird die Erntegutkonstellation über eine Mensch-Maschine-Schnittstelle 14 des Fahrerassistenzsystems 10 beim Benutzer abgefragt. Denkbar ist allerdings auch, dass ein Vorfeldsensor 15 vorgesehen ist, der die Erntegutkonstellation, insbesondere die Fruchtart, sensorisch erfasst.

Ähnliches gilt für die Ermittlung der Maschinenkonstellation. Auch hier kann es vorgesehen sein, dass die Maschinenkonstellation über die Mensch-Maschine-Schnittstelle 14 vom Benutzer abgefragt wird oder dass die Maschinenkonstellation über einen entsprechenden Maschinensensor 16 sensorisch erfasst wird.

Hier und vorzugsweise weist die Reinigungsanordnung 5 wie oben angedeutet ein Reinigungsgebläse 5a, ein Obersieb 5b und ein Untersieb 5c auf, wobei für die Ansteuerung der Reinigungsanordnung 5 der Volumenstrom des Reinigungsgebläses 5a und/oder die Obersiebweite und/oder die Untersiebweite änderbar ist bzw. sind. Andere, dem Arbeitsorgan "Reinigungsanordnung" zugeordnete Maschinenparameter sind denkbar.

Bei der Ermittlung der Erntegutkonstellation "Mais" und der Ermittlung der Maschinenkonstellation "Reinigungsanordnung mit Untersieb" wird mittels des Fahrerassistenzsystems 10 eine Prozessführungsstrategie ausgewählt, die eine automatische Ansteuerung der Reinigungsanordnung 5 umfasst. Sofern dagegen die Erntegutkonstellation "Mais" und die Maschinenkonfiguration "Reinigungsanordnung ohne Untersieb" ermittelt wird, wird mittels des Fahrerassistenzsystems 10 eine Prozessführungsstrategie ausgewählt, die eine benutzergeführte Ansteuerung der Reinigungsanordnung 5 umfasst. Bei dem dargestellten und insoweit bevorzugten Ausführungsbeispiel liegt dies daran, dass die automatische Ansteuerung der Reinigungsanordnung 5 hier basierend auf der Ermittlung mindestens eines Überkehrparameters, insbesondere des Überkehrvolumens und/oder des Kornanteils am Überkehrvolumen, vorgenommen wird. Ohne Untersieb 5c findet eine Überkehr 9 überhaupt nicht oder in ganz geringem Maße statt, so dass die obigen Überkehrparameter keine verlässliche Aussage zulassen, die die Basis für die automatische Ansteuerung sein kann.

Für den Fall, dass ein Untersieb 5c vorhanden ist und die Reinigungsanordnung 5 wie oben angesprochen automatisch angesteuert wird, sind die folgenden Maßnahmen für die Einstellung oder Optimierung des Arbeitsprozessparameters "Reinigungsverluste" denkbar.

Bei der Ermittlung eines Anstiegs des Kornanteils am Überkehrvolumen oberhalb einer vorbestimmten Schwelle wird mittels des Fahrerassistenzsystems 10 die Untersiebweite erhöht. Damit kann gewährleistet werden, dass Körner, die das Untersieb 5c fälschlicherweise nicht passiert haben, nunmehr das Untersieb 5c passieren können.

Für den Fall, dass die Nichtkornbestandteile im Korntank nunmehr anteilsmäßig zunehmen, kann die Erhöhung des Volumenstroms des Reinigungsgebläses 5a eine geeignete Maßnahme sein.

Ebenso kann bei der Ermittlung eines Anstiegs des Überkehrvolumens über eine vorbestimmte Schwelle die Untersiebweite der Reinigungsanordnung 5 erhöht und/oder der Volumenstrom des Reinigungsgebläses 5a erhöht werden.

Die oben genannten Maßnahmen zur Einstellung bzw. Optimierung des Ernteprozessparameters "Reinigungsverluste" sind Bestandteil der dazugehörigen Prozessführungsstrategie. Diesen Maßnahmen können Steuer- bzw. Regelparameter und/oder ein oben angesprochenes Kennfeld zugrundeliegen. In Abhängigkeit von der Maschinenkonstellation kann die Prozessführungsstrategie durch eine andere gespeicherte Prozessführungsstrategie ausgetauscht werden, was grundsätzlich einer Parametrierung der Prozessführungsstrategie entsprechen kann.

Nach einer weiteren Lehre, der eigenständige Bedeutung zukommt, wird der oben angesprochene Mähdrescher 1 als solcher beansprucht. Auf alle Ausführungen zu dem vorschlagsgemäßen Verfahren, die geeignet sind, den Mähdrescher 1 zu erläutern, darf verwiesen werden.

### Bezugszeichenliste

- 1: Mähdrescher
- 2: Schneidwerk
- 3: Dreschwerk
- 3a: Dreschtrommel
- 3b: Dreschkorb
- 4: Abscheideanordnung
- 5: Reinigungsanordnung
- 5a: Reinigungsgebläse
- 5b: Obersieb
- 5c: Untersieb
- 6: Verteilanordnung
- 7: Transportanordnung
- 8: Korntank
- 9: Überkehr
- 10: Fahrerassistenzsystem
- 11: Speicher
- 12: Rechenvorrichtung
- 13: Benutzer
- 14: Mensch-Maschine-Schnittstelle
- 15: Vorfeldsensor
- 16: Maschinensensor
- B: Bedingungen
- K: Kennfeld
- P: Prozessführungsstrategien
- Q: Qualitätskriterium

## Patentansprüche

1. Verfahren für den Betrieb eines Mähdreschers (1) mit mehreren Arbeitsorganen (2-6) und mit einem Fahrerassistenzsystem (10),
wobei das Fahrerassistenzsystem (10) einen Speicher (11) zum Hinterlegen von Daten und eine Rechenvorrichtung (12) zur Verarbeitung der in dem Speicher (11) hinterlegten Daten umfasst,
wobei in dem Speicher (11) des Fahrerassistenzsystems (10) mehrere Prozessführungsstrategien (P) abgelegt sind, die jeweils auf die Erfüllung mindestens eines Qualitätskriteriums (Q) gerichtet sind,
wobei das Fahrerassistenzsystem (10) basierend auf einer Prozessführungsstrategie (P) mindestens einen Maschinenparameter der Arbeitsorgane (2-6) automatisch ermittelt und dem jeweiligen Arbeitsorgan (2-6) vorgibt,
**dadurch gekennzeichnet,**
**dass** mittels des Fahrerassistenzsystems (10) die Erntegutkonstellation und die Maschinenkonstellation ermittelt werden und basierend auf der Erntegutkonstellation und der Maschinenkonstellation das Fahrerassistenzsystem (10) eine Prozessführungsstrategie (P)vorauswählt und wobei der Ernteprozess zunächst basierend auf der vorausgewählten Prozessführungsstrategie (P) umgesetzt wird und dass die Prozessführungsstrategie (P) im Laufe des Ernteprozesses vom Fahrerassistenzsystem (10) optimiert oder vom Fahrerassistenzsystem (10) durch eine andere Prozessführungsstrategie (P) ersetzt wird.

2. Verfahren nach Anspruch 1, **dadurch gekennzeichnet, dass** die vorausgewählte Prozessführungsstrategie (P) eine auf die Erfüllung des mindestens einen zugeordneten Qualitätskriteriums (Q) gerichtete Steuerung oder Regelung umfasst, vorzugsweise, dass die Steuer- bzw. Regelparameter von der Erntegutkonstellation und von der Maschinenkonstellation abhängen.

3. Verfahren nach Anspruch 2, **dadurch gekennzeichnet, dass** die Steuerung bzw. Regelung eine auf mindestens einem Kennfeld (K) basierende Steuerung oder Regelung ist und dass das mindestens eine Kennfeld (K) von der Erntegutkonstellation und von der Maschinenkonstellation abhängt.

4. Verfahren nach einem der vorhergehenden Ansprüche, **dadurch gekennzeichnet, dass** die Erntegutkonstellation die jeweils abzuerntende Fruchtart wie "Weizen", "Gerste", "Hafer", "Mais" o. dgl. umfasst.

5. Verfahren nach einem der vorhergehenden Ansprüche, **dadurch gekennzeichnet, dass** die Maschinenkonstellation die mechanische und/oder steuerungstechnische Ausstattung mindestens eines Arbeitsorgans (2-6) umfasst, vorzugsweise, dass die Maschinenkonstellation in Abhängigkeit von der Erntegutkonstellation einzustellen ist.

6. Verfahren nach einem der vorhergehenden Ansprüche, **dadurch gekennzeichnet, dass** in Abhängigkeit von der Maschinenkonstellation den Arbeitsorganen (2-6) unterschiedliche Maschinenparameter vorgebbar sind und dass das Fahrerassistenzsystem (10) in Abhängigkeit von der Maschinenkonstellation unterschiedliche Maschinenparameter ermittelt.

7. Verfahren nach einem der vorhergehenden Ansprüche, **dadurch gekennzeichnet, dass** die Vorauswahl der Prozessführungsstrategie (P) mittels des Fahrerassistenzsystems (10) auf die Abfrage von in dem Speicher (11) abgelegten Bedingungen zurückgeht, wobei hierfür in dem Speicher (11) mindestens einer Prozessführungsstrategie (P) mindestens eine die Erntegutkonstellation betreffende Bedingung und mindestens eine die Maschinenkonstellation betreffende Bedingung zugeordnet ist und wobei die Prozessführungsstrategie (P) nur bei Erfüllung aller zugeordneten Bedingungen vorausgewählt wird.

8. Verfahren nach einem der vorhergehenden Ansprüche, **dadurch gekennzeichnet, dass** der Mähdrescher (1) mindestens die Arbeitsorgane (2-6) Schneidwerk (2), Dreschwerk (3), Abscheideanordnung (4) und Reinigungsanordnung (5) aufweist und dass mindestens eines dieser Arbeitsorgane (2-6) zur Änderung der Maschinenkonstellation konfigurierbar ist.

9. Verfahren nach Anspruch 8, **dadurch gekennzeichnet, dass** die Reinigungsanordnung (5) ein Reinigungsgebläse (5a), ein Obersieb (5b) und ein Untersieb (5c) aufweist und dass für die Ansteuerung der Reinigungsanordnung (5) der Volumenstrom des Reinigungsgebläses (5a) und/oder die Obersiebweite und/oder die Untersiebweite veränderbar ist bzw. sind.

10. Verfahren nach Anspruch 8 oder 9, **dadurch gekennzeichnet, dass** bei der Ermittlung einer Erntegutkonstellation "Mais" und der Ermittlung einer Maschinenkonstellation "Reinigungsanordnung mit Untersieb" mittels des Fahrerassistenzsystems (10) eine Prozessführungsstrategie ausgewählt wird, die eine automatische Ansteuerung der Reinigungsanordnung (5) umfasst, und/oder, dass bei der Ermittlung einer Erntegutkonstellation "Mais" und der Ermittlung einer Maschinenkonfiguration "Reinigungsanordnung ohne Untersieb" mittels des Fahrerassistenzsystems (10) eine Prozessführungsstrategie ausgewählt wird, die eine benutzergeführte Ansteuerung der Reinigungsanordnung (5) umfasst.

11. Verfahren nach Anspruch 10, **dadurch gekennzeichnet, dass** die automatische Ansteuerung der Reinigungsanordnung (5) basierend auf der Ermittlung mindestens eines Überkehrparameters, insbesondere des Überkehrvolumens und/oder des Kornanteils am Überkehrvolumen, vorgenommen wird.

12. Verfahren nach Anspruch 11, **dadurch gekennzeichnet, dass** bei der Ermittlung eines Anstiegs des Kornanteils am Überkehrvolumen oberhalb einer vorbestimmten Schwelle mittels des Fahrerassistenzsystems (10) die Untersiebweite erhöht wird.

13. Verfahren nach Anspruch 11 oder 12, **dadurch gekennzeichnet, dass** bei der Ermittlung eines Anstiegs des Überkehrvolumens über eine vorbestimmte Schwelle die Untersiebweite der Reinigungsanordnung (5) erhöht wird und/oder der Volumenstrom eines Reinigungsgebläses (5a) erhöht wird.

14. Mähdrescher zur Durchführung eines Verfahrens nach einem der vorhergehenden Ansprüche mit mehreren Arbeitsorganen (2-6) und mit einem Fahrerassistenzsystem (10),
wobei das Fahrerassistenzsystem (10) einen Speicher (11) zum Hinterlegen von Daten und eine Rechenvorrichtung (12) zur Verarbeitung der in dem Speicher (11) hinterlegten Daten umfasst,
wobei in dem Speicher (11) des Fahrerassistenzsystems (10) mehrere Prozessführungsstrategien (P) abgelegt sind, die jeweils auf die Erfüllung mindestens eines Qualitätskriteriums (Q) gerichtet sind,
wobei das Fahrerassistenzsystem (10) basierend auf einer Prozessführungsstrategie (P) mindestens einen Maschinenparameter der Arbeitsorgane (2-6) automatisch ermittelt und dem jeweiligen Arbeitsorgan (2-6) vorgibt,
**dadurch gekennzeichnet,**
**dass** mittels des Fahrerassistenzsystems (10) die Erntegutkonstellation und die Maschinenkonstellation ermittelt werden und basierend auf der Erntegutkonstellation und der Maschinenkonstellation das Fahrerassistenzsystem (10) eine Prozessführungsstrategie (P) vorauswählt und wobei der Ernteprozess zunächst basierend auf der vorausgewählten Prozessführungsstrategie (P) umgesetzt wird und dass die Prozessführungsstrategie (P) im Laufe des Ernteprozesses vom Fahrerassistenzsystem (10) optimiert oder vom Fahrerassistenzsystem (10) durch eine andere Prozessführungsstrategie (P) ersetzt wird.

## Claims

1. A method for operating a combine harvester (1) with a plurality of working units (2-6) and with a driver assistance system (10),
wherein the driver assistance system (10) comprises a memory (11) for storing data and a processing unit (12) for processing the data stored in the memory (11),
wherein a plurality of process control strategies (P) are stored in the memory (11) of the driver assistance system (10), which are respectively directed towards meeting at least one quality criterion (Q),
wherein the driver assistance system (10) automatically determines at least one machine parameter of the working units (2-6) on the basis of a process control strategy (P) and specifies it to the respective working unit (2-6),
**characterized in that**
the harvested material configuration and the machine configuration are determined by means of the driver assistance system (10) and the driver assistance system (10) preselects a process control strategy (P) on the basis of the harvested material configuration and the machine configuration and wherein the harvesting process is initially implemented on the basis of the preselected process control strategy (P) and **in that** the process control strategy (P) is optimized by the driver assistance system (10) during the course of the harvesting process, or another process control strategy (P) is put in its place by the driver assistance system (10).

2. The method according to claim 1, **characterized in that** the preselected process control strategy (P) comprises a control or regulation directed towards meeting the at least one associated quality criterion (Q), preferably **in that** the control or regulation parameters are a function of the harvested material configuration and of the machine configuration.

3. The method according to claim 2, **characterized in that** the control or regulation is a control or regulation on the basis of at least one characteristic diagram (K) and **in that** the at least one characteristic diagram (K) is a function of the harvested material configuration and of the machine configuration.

4. The method according to one of the preceding claims, **characterized in that** the harvested material configuration comprises the respective crop type to be harvested, such as "wheat", "barley", "oats", "corn" or the like.

5. The method according to one of the preceding claims, **characterized in that** the machine configuration comprises the mechanical and/or control engineering features of at least one working unit (2-6), preferably **in that** the machine configuration is to be set as a function of the harvested material configuration.

6. The method according to one of the preceding claims, **characterized in that** different machine parameters can be specified as a function of the machine configuration to the working units (2-6) and **in that** the driver assistance system (10) determines different machine parameters as a function of the machine configuration.

7. The method according to one of the preceding claims, **characterized in that** the preselection of the process control strategy (P) by means of the driver assistance system (10) is based on the interrogation of conditions stored in the memory (11), wherein for this purpose, at least one condition relating to the harvested material configuration and at least one condition relating to the machine configuration are associated for at least one process control strategy (P) in the memory (11) and wherein the process control strategy (P) is only preselected when all of the associated conditions are met.

8. The method according to one of the preceding claims, **characterized in that** the combine harvester (1) has at least cutting unit (2), threshing unit (3), separating assembly (4) and cleaning assembly (5) as the working units (2-6) and **in that** at least one of these working units (2-6) can be configured to vary the machine configuration.

9. The method according to claim 8,
**characterized in that** the cleaning assembly (5) has a cleaning fan (5a), an upper sieve (5b) and a lower sieve (5c) and **in that** to control the cleaning assembly (5), the volumetric flow of the cleaning fan (5a) and/or the width of the upper sieve and/or the width of the lower sieve can be varied.

10. The method according to claim 8 or claim 9,
**characterized in that** during the determination of a "corn" harvested material configuration and the determination of a "cleaning assembly with lower sieve" machine configuration, a process control strategy is selected by means of the driver assistance system (10) which comprises an automatic control of the cleaning assembly (5), and/or in that during the determination of a "corn" harvested material configuration and the determination of a "cleaning assembly without lower sieve" machine configuration, a process control strategy is selected by means of the driver assistance system (10) which comprises a user-led control of the cleaning assembly (5).

11. The method according to claim 10, **characterized in that** the automatic control of the cleaning assembly (5) is implemented on the basis of the determination of at least one return parameter, in particular the return volume and/or the proportion of grain in the return volume.

12. The method according to claim 11, **characterized in that** when an increase in the proportion of grain in the return volume above a predetermined threshold is determined by means of the driver assistance system (10), the width of the lower sieve is increased.

13. The method according to claim 11 or claim 12, **characterized in that** when an increase in the return volume above a predetermined threshold is determined, the width of the lower sieve of the cleaning assembly (5) is increased and/or the volumetric flow of a cleaning fan (5a) is increased.

14. A combine harvester for carrying out a method according to one of the preceding claims, with a plurality of working units (2-6) and with a driver assistance system (10),
wherein the driver assistance system (10) comprises a memory (11) for storing data and a processing unit (12) for processing the data stored in the memory (11),
wherein a plurality of process control strategies (P) are stored in the memory (11) of the driver assistance system (10), which are respectively directed towards meeting at least one quality criterion (Q),
wherein the driver assistance system (10) automatically determines at least one machine parameter of the working units (2-6) on the basis of a process control strategy (P) and specifies it to the respective working unit (2-6),
**characterized in that**
the harvested material configuration and the machine configuration are determined by means of the driver assistance system (10) and the driver assistance system (10) preselects a process control strategy (P) on the basis of the harvested material configuration and the machine configuration and wherein the harvesting process is initially implemented on the basis of the preselected process control strategy (P) and **in that** the process control strategy (P) is optimized by the driver assistance system (10) during the course of the harvesting process, or another process control strategy (P) is put in its place by the driver assistance system (10).

## Revendications

1. Procédé de fonctionnement d'une moissonneuse-batteuse (1) comprenant plusieurs organes de travail (2 à 6) et comprenant un système d'assistance au conducteur (10),
le système d'assistance au conducteur (10) comportant une mémoire (11) pour enregistrer des données et un dispositif de calcul (12) pour traiter les données enregistrées dans la mémoire (11),
plusieurs stratégies de conduite de procédé (P) étant enregistrées dans la mémoire (11) du système d'assistance au conducteur (10), qui visent respectivement à remplir au moins un critère de qualité (Q),
le système d'assistance au conducteur (10) déterminant automatiquement au moins un paramètre machine des organes de travail (2 à 6), sur la base d'une stratégie de conduite de procédé (P), et le prédéfinissant pour l'organe de travail (2 à 6) respectif,
**caractérisé en ce que**
la constellation de récolte et la constellation de machine sont déterminées à l'aide du système d'assistance au conducteur (10) et, sur la base de la constellation de récolte et de la constellation de machine, le système d'assistance au conducteur (10) présélectionne une stratégie de conduite de procédé (P), le processus de récolte étant d'abord mis en oeuvre sur la base de la stratégie de conduite de procédé (P) présélectionnée, et **en ce que** la stratégie de conduite de procédé (P) est optimisée par le système d'assistance au conducteur (10) au cours du processus de récolte ou est remplacée par une autre stratégie de conduite de procédé (P) par le système d'assistance au conducteur (10).

2. Procédé selon la revendication 1, **caractérisé en ce que** la stratégie de conduite de procédé (P) présélectionnée comprend une commande ou une régulation visant à remplir le critère de qualité (Q) associé, au nombre d'au moins un, de préférence que les paramètres de commande ou de régulation sont fonction de la constellation de récolte et de la constellation de machine.

3. Procédé selon la revendication 2, **caractérisé en ce que** la commande ou la régulation est une commande ou régulation basée sur au moins un diagramme caractéristique (K), et **en ce que** le diagramme caractéristique (K), au nombre d'au moins un, est fonction de la constellation de récolte et de la constellation de machine.

4. Procédé selon une des revendications précédentes, **caractérisé en ce que** la constellation de récolte comprend le type de culture respectif à récolter, tel que « blé », « orge », « avoine », « maïs » ou analogue.

5. Procédé selon une des revendications précédentes, **caractérisé en ce que** la constellation de machine comprend l'équipement mécanique et/ou de technique de commande d'au moins un organe de travail (2 à 6), de préférence que la constellation de machine doit être réglée en fonction de la constellation de récolte.

6. Procédé selon une des revendications précédentes, **caractérisé en ce que** des paramètres machine différents peuvent être prédéfinis pour les organes de travail (2 à 6), en fonction de la constellation de machine, et **en ce que** le système d'assistance au conducteur (10) détermine des paramètres machine différents en fonction de la constellation de machine.

7. Procédé selon une des revendications précédentes, **caractérisé en ce que** la présélection de la stratégie de conduite de procédé (P) à l'aide du système d'assistance au conducteur (10) se fonde sur la consultation de conditions enregistrées dans la mémoire (11), sachant qu'à cet effet au moins une condition concernant la constellation de récolte et au moins une condition concernant la constellation de machine sont associées à au moins une stratégie de conduite de procédé (P) dans la mémoire (11), et la stratégie de conduite de procédé (P) n'est présélectionnée que si toutes les conditions associées sont remplies.

8. Procédé selon une des revendications précédentes, **caractérisé en ce que** la moissonneuse-batteuse (1) présente au moins les organes de travail (2 à 6) que sont le tablier de coupe (2), le système de battage (3), le dispositif séparateur (4) et le dispositif nettoyeur (5), et **en ce qu'**au moins un de ces organes de travail (2 à 6) peut être configuré pour modifier la constellation de machine.

9. Procédé selon la revendication 8, **caractérisé en ce que** le dispositif nettoyeur (5) présente une soufflante de nettoyage (5a), une grille supérieure (5b) et une grille inférieure (5c), et **en ce que** pour l'activation du dispositif nettoyeur (5), le flux volumique de la soufflante de nettoyage (5a) et/ou l'écartement de grille supérieure et/ou l'écartement de grille inférieure peuvent être modifiés.

10. Procédé selon la revendication 8 ou 9, **caractérisé en ce que** lors de la détermination d'une constellation de récolte « maïs » et de la détermination d'une constellation de machine « dispositif nettoyeur avec grille inférieure », à l'aide du système d'assistance au conducteur (10), une stratégie de conduite de procédé est choisie, qui comprend une activation automatique du dispositif nettoyeur (5), et/ou **en ce que** lors de la détermination d'une constellation de récolte « maïs » et de la détermination d'une constellation de machine « dispositif nettoyeur sans grille inférieure », à l'aide du système d'assistance au conducteur (10), une stratégie de conduite de procédé est choisie, qui comprend une activation du dispositif nettoyeur (5) guidée par l'utilisateur.

11. Procédé selon la revendication 10, **caractérisé en ce que** l'activation automatique du dispositif nettoyeur (5) est effectuée sur la base de la détermination d'au moins un paramètre d'ôtons, notamment du volume d'ôtons et/ou de la proportion de graines dans le volume d'ôtons.

12. Procédé selon la revendication 11, **caractérisé en ce que** lors de la détermination d'une augmentation de la proportion de graines dans le volume d'ôtons au-dessus d'un seuil prédéfini, à l'aide du système d'assistance au conducteur (10), l'écartement de la grille inférieure est augmenté.

13. Procédé selon la revendication 11 ou 12, **caractérisé en ce que** lors de la détermination d'une augmentation du volume d'ôtons au-dessus d'un seuil prédéfini, l'écartement de la grille inférieure du dispositif nettoyeur (5) est augmentée et/ou le flux volumique d'une soufflante de nettoyage (5a) est augmenté.

14. Moissonneuse-batteuse pour la mise en oeuvre du procédé selon une des revendications précédentes, comprenant plusieurs organes de travail (2 à 6) et un système d'assistance au conducteur (10),
le système d'assistance au conducteur (10) comportant une mémoire (11) pour enregistrer des données et un dispositif de calcul (12) pour traiter les données enregistrées dans la mémoire (11),
plusieurs stratégies de conduite de procédé (P) étant enregistrées dans la mémoire (11) du système d'assistance au conducteur (10), qui visent respectivement à remplir au moins un critère de qualité (Q),
le système d'assistance au conducteur (10) déterminant automatiquement au moins un paramètre machine des organes de travail (2 à 6), sur la base d'une stratégie de conduite de procédé (P), et le prédéfinissant pour l'organe de travail (2 à 6) respectif,
**caractérisée en ce que**
la constellation de récolte et la constellation de machine sont déterminées à l'aide du système d'assistance au conducteur (10) et, sur la base de la constellation de récolte et de la constellation de machine, le système d'assistance au conducteur (10) présélectionne une stratégie de conduite de procédé (P), le processus de récolte étant d'abord mis en oeuvre sur la base de la stratégie de conduite de procédé (P) présélectionnée, et **en ce que** la stratégie de conduite de procédé (P) est optimisée par le système d'assistance au conducteur (10) au cours du processus de récolte ou est remplacée par une autre stratégie de conduite de procédé (P) par le système d'assistance au conducteur (10).
